(19) Europäisches Patentamt
European Patent Office
Office européen des brevets

(11) **EP 3 104 126 B1**

(12) **EUROPEAN PATENT SPECIFICATION**

(45) Date of publication and mention
of the grant of the patent:
**17.02.2021 Bulletin 2021/07**

(51) Int Cl.:
***G01C 25/00*** *(2006.01)*          ***G01C 21/16*** *(2006.01)*
***G01P 15/18*** *(2013.01)*          ***G01P 21/00*** *(2006.01)*
***G01C 17/38*** *(2006.01)*          ***G01D 21/00*** *(2006.01)*

(21) Application number: **16170695.7**

(22) Date of filing: **20.05.2016**

(54) **SYSTEMS AND METHODS FOR SYNTHETIC SENSOR SIGNAL GENERATION**

SYSTEME UND VERFAHREN FÜR SYNTHETISCHE SENSORSIGNALERZEUGUNG

SYSTÈMES ET PROCÉDÉS DE GÉNÉRATION DE SIGNAL DE CAPTEUR SYNTHÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2015 US 201561165431 P
31.12.2015 US 201514985833**

(43) Date of publication of application:
**14.12.2016 Bulletin 2016/50**

(73) Proprietor: **InvenSense, Inc.
San Jose, CA 95110 (US)**

(72) Inventors:
• **KARAHAN, Sinan
Menlo Park, CA 94205 (US)**
• **KEAL, William Kerry
San Jose, CA 95128 (US)**
• **SRIVASTAVA, Dhru
Sunnyvale, CA 94089 (US)**
• **SHEKHAR, Hemabh
San Jose, CA 95134 (US)**
• **ZHENG, Yuan
Fremont, CA 94539 (US)**

(74) Representative: **Marks & Clerk France
Immeuble "Visium"
22, avenue Aristide Briand
94117 Arcueil Cedex (FR)**

(56) References cited:
JP-A- 2009 019 898      US-A- 5 410 487
US-A1- 2006 074 558      US-A1- 2009 254 279
US-A1- 2013 090 882

**Description**

FIELD OF THE PRESENT DISCLOSURE

This disclosure generally relates to inertial sensors and more specifically to deriving a synthetic signal for one or more sensitive axes from other sensor information.

BACKGROUND

The development of microelectromechanical systems (MEMS) has enabled the incorporation of a wide variety of sensors into mobile devices, such as cell phones, laptops, tablets, gaming devices and other portable, electronic devices. Non-limiting examples of such sensors include an accelerometer, a gyroscope, a magnetometer, a pressure sensor, a microphone, a proximity sensor, an ambient light sensor, an infrared sensor, and the like. Further, sensor fusion processing may be performed to combine the data from a plurality of sensors to provide an improved characterization of the device's motion or orientation.

Inertial sensors in general have multiple axes that measure the motion of the sensors in several directions. For example, 3-axis accelerometers or 3-axis gyroscopes have 3 orthogonal axes. One or more of these axes may become, temporarily or permanently, defective during the lifetime of the sensors. For example, one of the axes of a 3-axis accelerometer may malfunction, get stuck or have some other degradation that keeps the sensor from providing correct outputs. The problem may be due to a production error or may occur during the lifetime of the device, for example because of an external event such as a substantial shock. If an axis is defective in production, this may be detected before incorporating the sensor in its intended device, such as e.g. a smartphone. However, an axis may become defective after production, where the root causes may still be due to some production error or problem. The problem with the axis may be permanent, or may be temporary. For example, for an accelerometer an axis gets stuck due to a first shock, and a second shock may get the axis 'unstuck'. An axis can get stuck and unstuck at various times during the lifetime of the accelerometer. A stuck or malfunctioning axis will result in the accelerometer signal being absent, constant ,or unusually high for extended periods. In these cases, the output of the accelerometer for that axis becomes unusable.

When a signal for one of the axis of a sensor is unusable or unavailable, the sensor may be unable to function as designed and operations depending on information from this sensor may be compromised. In some scenarios, output from the sensor may be used directly by an application which may result in a degradation of performance of that application when the signal for a sensor axis is not provided or is defective. Further, many sensor operations are interrelated. For example, sensor fusion techniques may be used to leverage data from multiple types of sensors to estimate an orientation of a portable device or make other determinations regarding the motion of the portable device. When one sensor is not providing an expected output for an axis, any sensor fusion algorithm that uses this information may no longer function properly. In turn, any function or application of the device that relies on the sensor fusion result may also no longer function properly.

In light of the above, one of ordinary skill in the art will appreciate the desirability of providing a synthetic signal for an axis of a sensor that is not functioning properly. Further, it may be desirable to provide a substitute signal that is based at least in part on the synthetic signal for a sensor axis. Still further, it may be desirable to provide the synthetic signal by combining data from another axis or other axes of the sensor with the output of another sensor. To address these needs and others, this disclosure is directed to techniques for providing a synthetic sensor signal as described in the materials below.

U.S. Patent Publication No. 2009/0254279A1 relates to compensating for the misalignment of a navigation device with respect to a vehicle. In one example, the compensation is made by applying a high pass filter to a measured acceleration of the vehicle to produce a motion acceleration signal, weighting the motion acceleration signal with a measured steering rate of the vehicle, and deriving misalignment parameters for the navigation device with respect to the vehicle using the weighted motion acceleration signal.

US5410487 discloses a counting section including a first gyro pulse counter which counts gyro pulses from each of X-, Y-, Z- and S-axis gyroscopes during each counting period after being reset immediately before the start of the counting period and outputs the count value as a first gyro pulse count value at fixed time intervals; and a second gyro pulse counter which is reset at said fixed time intervals, counts the gyro pulses and outputs the count value as a second gyro pulse count value. A dynamic error calculating section includes: gyro multipliers/subtractors whereby, for each combination of two different main axes, a mutual product difference of the gyro pulse count values for the two axes is calculated as a main-axis system gyro pulse error and, for each combination of one of the X, Y and Z axes and the S axis, a mutual product difference of the gyro pulse count values for the S axis and each of the X, Y and Z axes is calculated as an auxiliary-axis system gyro error; and a gyro error integrating section whereby each of the X-axis, Y-axis and Z-axis system gyro errors and the auxiliary-axis system gyro error, provided at the fixed time intervals, are accumulated within each calculation period to obtain a gyro error integrated value. A strap-down calculating processor uses the gyro error integrated values from the gyro error integrating section to calculate the correctional quantity of a coning error for each system wherein one of the X, Y and Z axes is replaced with the S axis.

## SUMMARY

In accordance with the present invention in a first aspect there is provided method for providing sensor data for a portable device as defined in the appended independent claim 1. In accordance with the present invention in a first aspect there is provided a portable device as defined in the appendent independent claim 8. Preferred embodiments are defined in the dependent claims.

## BRIEF DESCRIPTION OF THE DRAWINGS

FIG. 1 is a schematic diagram of sensor fusion using an accelerometer, a gyroscope and a magnetometer according to an embodiment.

FIG. 2 is a schematic diagram of a routine for using a generated synthetic sensor signal according to an embodiment.

FIG. 3 is a schematic diagram of sensor fusion using an accelerometer with a generated synthetic sensor signal, a gyroscope and a magnetometer according to an embodiment.

FIG. 4 is a schematic diagram of a routine for generating candidate synthetic sensor signals according to an embodiment.

FIG. 5 is a schematic diagram showing sensor fusion paths for candidate synthetic sensor signals according to an embodiment.

FIG. 6 is a schematic diagram showing selection among candidate synthetic sensor signals according to an embodiment.

FIG. 7 is a schematic diagram of a routine for generating a synthetic sensor signal for an accelerometer according to an embodiment.

FIG. 8 is a schematic diagram showing selection among candidate synthetic accelerometer sensor signals according to an embodiment.

FIG. 9 is a schematic diagram showing exemplary preferred orientations of a portable device according to an embodiment.

FIG. 10 is a schematic diagram of techniques for generating a synthetic sensor signal according to an embodiment.

FIG. 11 is a schematic diagram of a routine for performing sensor fusion with a selected candidate synthetic sensor signal according to an embodiment.

FIG. 12 is a schematic diagram of a routine for generating a synthetic sensor signal for a gyroscope according to an embodiment.

FIG. 13 is a schematic diagram of portable device for providing sensor data according to an embodiment.

## DETAILED DESCRIPTION

At the outset, it is to be understood that this disclosure is not limited to particularly exemplified materials, architectures, routines, methods or structures as such may vary. Thus, although a number of such options, similar or equivalent to those described herein, can be used in the practice or embodiments of this disclosure, the preferred materials and methods are described herein.

It is also to be understood that the terminology used herein is for the purpose of describing particular embodiments of this disclosure only and is not intended to be limiting.

The detailed description set forth below in connection with the appended drawings is intended as a description of exemplary embodiments of the present disclosure and is not intended to represent the only exemplary embodiments in which the present disclosure can be practiced. The term "exemplary" used throughout this description means "serving as an example, instance, or illustration," and should not necessarily be construed as preferred or advantageous over other exemplary embodiments. The detailed description includes specific details for the purpose of providing a thorough understanding of the exemplary embodiments of the specification. It will be apparent to those skilled in the art that the exemplary embodiments of the specification may be practiced without these specific details. In some instances, well known structures and devices are shown in block diagram form in order to avoid obscuring the novelty of the exemplary embodiments presented herein.

For purposes of convenience and clarity only, directional terms, such as top, bottom, left, right, up, down, over, above, below, beneath, rear, back, and front, may be used with respect to the accompanying drawings or chip embodiments. These and similar directional terms should not be construed to limit the scope of the disclosure in any manner.

In this specification and in the claims, it will be understood that when an element is referred to as being "connected to" or "coupled to" another element, it can be directly connected or coupled to the other element or intervening elements may be present. In contrast, when an element is referred to as being "directly connected to" or "directly coupled to" another element, there are no intervening elements present.

Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments described herein may be discussed in the general context of processor-executable instructions residing on some form of non-transitory processor-readable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the exemplary wireless communications devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium comprising instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor. For example, a carrier wave may be employed to carry computer-readable electronic data such as those used in transmitting and receiving electronic mail or in accessing a network such as the Internet or a local area network (LAN). Of course, many modifications may be made to this configuration without departing from the scope or spirit of the claimed subject matter.

The various illustrative logical blocks, modules, circuits and instructions described in connection with the embodiments disclosed herein may be executed by one or more processors, such as one or more sensor processing units (SPUs), digital signal processors (DSPs), general purpose microprocessors, application specific integrated circuits (ASICs), application specific instruction set processors (ASIPs), field programmable gate arrays (FPGAs), or other equivalent integrated or discrete logic circuitry. The term "processor," as used herein may refer to any of the foregoing structure or any other structure suitable for implementation of the techniques described herein. In addition, in some aspects, the functionality described herein may be provided within dedicated software modules or hardware modules configured as described herein. Also, the techniques could be fully implemented in one or more circuits or logic elements. A general purpose processor may be a microprocessor, but in the alternative, the processor may be any conventional processor, controller, microcontroller, or state machine. A processor may also be implemented as a combination of computing devices, e.g., a combination of a Motion Processor Unit (MPU) or Sensor Processing Unit (SPU) and a microprocessor, a plurality of microprocessors, one or more microprocessors in conjunction with an MPU/SPU core, or any other such configuration.

Unless defined otherwise, all technical and scientific terms used herein have the same meaning as commonly understood by one having ordinary skill in the art to which the disclosure pertains.

Finally, as used in this specification and the appended claims, the singular forms "a," "an" and "the" include plural referents unless the content clearly dictates otherwise.

As noted, the techniques of this disclosure includes providing a first sensor integrated with a portable device having multiple axes of measurement, providing at least a second sensor integrated with the portable device having multiple axes of measurement and combining data from the first sensor and the second sensor to generate a synthetic signal for a first axis of the first sensor. Generation of the synthetic sensor signal for a given sensor axis is based on a combination of information from another axis or other axes of the sensor together with information from one or more axes of an additional sensor. For example, the synthetic signal for a defective accelerometer axis may be based on the evolving attitude of the device derived from sensor fusion using the remaining correctly functioning accelerometer axes and the gyroscope axes.

The synthetic sensor signal is used to produce a substitute signal for the axis of the sensor by replacing the signal for the axis. These techniques are be employed when one axis of a sensor temporarily or permanently malfunctions. The method includes detecting when an axis of a sensor, such as an accelerometer, is malfunctioning or defective. If a malfunctioning axis is detected, a synthetic sensor signal is generated and used for that axis. The synthetic signal may also be combined with the actual signal of the other remaining sensor axes that are functioning properly to obtain a composed and complete sensor signal that may be used in the same manner as a nominal sensor signal. The composed sensor signal including the synthetic signal information may then be used as normal. For example, if the sensor with a defective axis is an accelerometer, the recomposed 3-axes accelerometer signal may than be further used in a 6-axis fusion with the gyroscope or magnetometer signals, or in a 9-axis fusion using both the gyroscope and magnetometer signals.

In the description that follows, the generation of the synthetic signal for a defective accelerometer axis using the gyroscope will be discussed first, and other examples will be discussed thereafter.

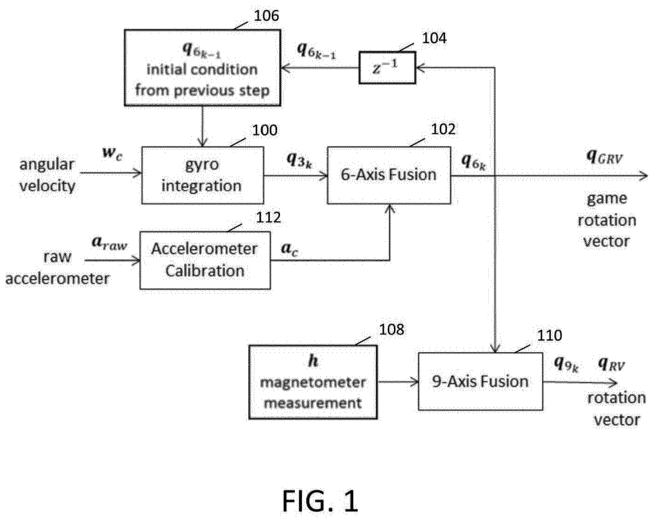

One approach for determining the orientation of a portable device with respect to an external frame of reference may involve combining information from multiple types of sensor using a sensor fusion algorithm. An example of a suitable architecture for implementing sensor fusion is schematically represented in FIG. 1. In this embodiment, sensor signals from an accelerometer, gyroscope, and magnetometer are used in a 6-axis and 9-axis sensor fusion to determine the orientation of the portable device when each set of three orthogonal axes for each sensor are functioning correctly.

Quaternions may be used to express the orientation or attitude of the device. The quaternion $q_k$ represents the orientation of the device for the k$^{th}$ sample of sensor data with respect to a stationary frame of reference, such as the world frame. Although quaternions in principle express rotations, a quaternion may also be used to express an orientation because the quaternion expresses the rotation required to rotate the axes of the body frame of the device to align with the axes of the world frame or other reference frame. Quaternions are only used as an example, and the methods proposed may also be performed using, for example, rotation matrices, Euler angles or any other way to express orientations.

The orientation resulting from the gyroscope integration output in block 100 is expressed as $q_{3k}$, indicating that information from three axes (the three axes of the gyroscope) is used in its determination, and is used as an input to 6-axis fusion block 102. Correspondingly, the output of 6-axis fusion block 102 may be expressed as quaternion $q_{6_k}$ and thus presents the orientation of the device in the world frame based on a fusion algorithm using samples **k** of the signals from three accelerometer axes and three gyroscope axes.

As mentioned above, the gyroscope integration yields a change in orientation with respect to a previous orientation. In order to determine $q_{3_k}$, the orientation as determined by the 6-axis fusion for the previous sample **k-1** expressed as $q_{6_{k-1}}$ is used , as indicated by $z^{-1}$ in block 104. The previous orientation $q_{6_{k-1}}$ in block 106 is used as input to the gyroscope integration block 100.

The result of the 6-axis fusion may also be combined with magnetometer measurement **h** in block 108 to obtain a reference with respect to the earth's magnetic field. The resulting orientation of this 9-axis fusion as output by block 110 is referred to as $q_{9_k}$ to reflect the use of signals from three axes each of three sensors. Alternatively, this orientation may also be referred to as rotation vector $q_{RV}$. The orientation derived from the 6-axis fusion $q_{6_k}$ output by block 102 may alternatively also be referred to as game rotation vector $q_{GRV}$, because if the orientation of the device is used for gaming or similar applications, the orientation with respect to the earth's magnetic field may not be required.

As illustrated, the 6-axis fusion of block 102 is based on a combination of the accelerometer and gyroscope signals. The raw accelerometer signals $a_{raw}$ are first calibrated in block 112 and the calibrated accelerometer signals $a_c$ are then used as an input for the 6-axis fusion in block 102. The accelerometer calibration may consist of any offset, gain, temperature, or drift correction. In addition, any conversion or correction may be made to convert the accelerometer signals to the reference frame of the device, further referred to as the body frame. The calibrated accelerometer signals $a_c$ therefore represent the acceleration signals for the 3-orthogonal axis of the body frame of the device.

The gyroscope signals are converted to the calibrated angular velocity signals $w_c$. A similar calibration process as for the accelerometer may be required to convert the raw gyroscope signals into the calibrated angular velocity signals $w_c$. Next, the angular velocity $w_c$ are integrated to determine a change in orientation with respect to the previous orientation.

In one example of the 6-axis fusion, the orientation of the device as determined based on the gyroscope $q_3$ is corrected using the accelerometer signal $a_c$. In the absence of proper acceleration of the device, and assuming no error on the accelerometer measurements, the accelerometer measures only gravity. Correspondingly, if the orientation is given by quaternion **q,** the rotation of $a_c$ expressed as $[0, a_x, a_y, a_z]^T$ from the body frame to the world frame using quaternion **q** yields the gravity vector **G** expressed as $[0, 0, 0, 1]^T$ according to Equation (1):

$$(1) \qquad G = \begin{bmatrix} 0 \\ 0 \\ 0 \\ 1 \end{bmatrix} = \bar{q} \otimes \begin{bmatrix} 0 \\ a_x \\ a_y \\ a_z \end{bmatrix} \otimes \bar{q}'$$

As will be appreciated, this indicates the acceleration $a_c^w$ in the world frame may be obtained after conversion of $a_c$ from the body frame to the world frame using the determined orientation $q_3$ based on the gyroscope, as shown by Equation (2):

$$(2) \qquad a_c^w = \begin{bmatrix} 0 \\ a_x^w \\ a_y^w \\ a_z^w \end{bmatrix} = \overline{q_3} \otimes \begin{bmatrix} 0 \\ a_x \\ a_y \\ a_z \end{bmatrix} \otimes \overline{q_3'}$$

Assuming no error on $a_c$, the acceleration in the world frame $a_c^w$ equals gravity if the quaternion $q_3$ has been determined correctly. Therefore, the comparison of $a_c^w$ with the gravity vector yields information if the orientation quaternion $q_3$ has been correctly determined. The quaternion $q_3$ may be corrected based on this comparison. For example, if the discrepancy is too big, the quaternion $q_3$ may be corrected so as to make $a_c^w$ equal to gravity. In other words, the corrected $q_3$ when applied to Equation (2) should results in $a_c^w$ equal to gravity. Alternatively, a quaternion correction rotation may be applied to $q_3$ that decreases the difference between $a_c^w$ and gravity.

In one example, the correction in the sensor fusion may be based on the accelerations orthogonal to gravity, in this case $a_x^w$ and $a_y^w$. The orientation quaternion based on the previous quaternion $q_{6k-1}$ and the gyroscope integration can be corrected by a small quaternion rotation, where the angle of this rotation is determined from a gain applied to acceleration case $a_x^w$ and $a_y^w$. This means that if these accelerations are bigger, the correction is bigger. The gain factor determines how much a correction is applied for a certain determined acceleration. Details of the quaternion correction may be found in co-pending, commonly owned U.S. Patent Application Serial No. 14/680,993 filed April 7, 2015, which is hereby incorporated by reference in its entirety and may be consulted for further reading.

Filtering may be applied to the acceleration $a_c$ to minimize any influence of proper acceleration of the device imparted on the device by the user. The filter may e.g. be a low pass filter. Alternatively, the comparison based on equation (2) may only be performed when no proper acceleration, and therefore only gravity, is detected.

The above example and equations demonstrate that 6-axis fusion may require three axes of accelerometer output in order to perform a comparison with the gravity vector. Correspondingly, if one of the accelerometer axes is defective or missing, 6-axis fusion according to this architecture cannot function properly. Therefore the accelerometer signal for the defective axis may be replaced or corrected with a synthetic accelerometer signal according to the techniques of this disclosure.

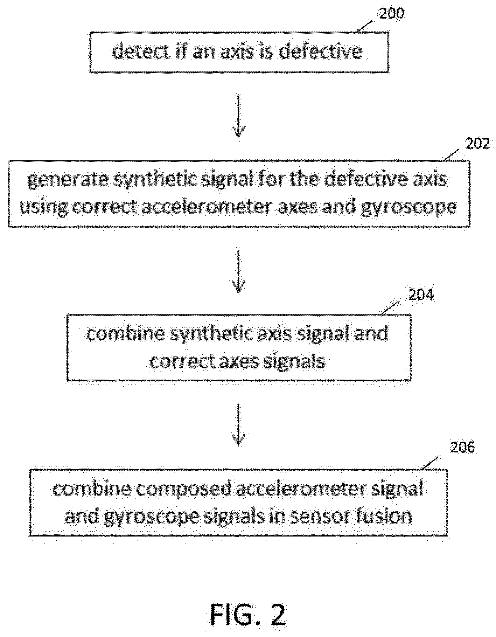

To help illustrate one embodiment for generating a synthetic sensor signal, FIG. 2 shows a high level schematic of combining information from a first sensor, an accelerometer, and a second sensor, a gyroscope, to generate a synthetic signal for a first axis of the first sensor. Beginning with 200, a determination is made whether all axes are functioning properly, or if one (or more) of the axes are defective and the signal needs to be replaced by a synthetic signal. Exemplary details of defective axis detection are explained in a later section. The determination made in 200 indicates whether there is a defective axis and if so, which axis is involved. Next, in 202, a synthetic acceleration signal is generated for the axis indicated to be defective or missing in 200. The synthetic signal may be generated based on the signals of the correctly functioning axes of the accelerometer and the gyroscope signals, as described below. Then, in 204, the synthetic signal for the defective axis and the correct signal for the other axes may be combined to a complete acceleration signals on three axes as shown. Finally, the composed accelerometer signal may be combined with the gyroscope signals in a sensor fusion operation as indicated by 206.

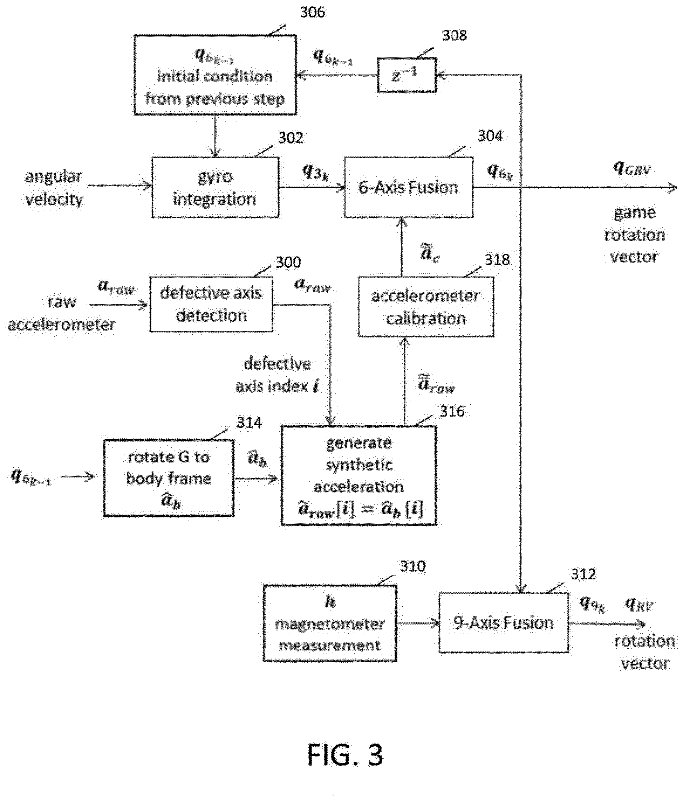

The use of a synthetic sensor signal in a sensor fusion architecture corresponding to that described with respect to FIG. 1 is schematically illustrated in the diagram of FIG. 3. In block 300, the raw accelerometer signals $a_{raw}$ may be used to check the different axes to determine if one or more are defective or missing. Several criteria, individually or combined, may be used to determine if an axis is correctly functioning or is defective. For example, the axis may not give any signal at all, or the axis may have a constant signal over a period of time (e.g. close to the maximum or minimum value). In another example, the axis may be defined as defective if the acceleration value is above or below a certain threshold for a period of time. For example, an axis may be defective or "stuck" if the signal is persistently above +1.5g or below -1.5g for the determined time, which may vary e.g. between 200ms to 1600ms (depending on specifications). A defective axis also may be detected by comparing the accelerometer signals and gyroscope signals. For example, if the accelerometer signal is constant, but the gyroscope signals indicate that the value on the axis should vary, the axis may be malfunctioning.

The defective axis detection block may also keep track of when the axis started malfunctioning. For example, a time stamp may be taken at the first time a defective axis is detected. The time stamp may be logged, e.g. in an available memory. The block may also have a counter that counts the amount of samples since the first detection of the defective axis. A counter of zero may indicate that no malfunction has taken place. The detection block may also indicate if the malfunction started in the middle of an operation, or if the axis was malfunctioning since the device startup.

As such, the output of the malfunction detection block may be used to indicate if an axis is defective, and if this is the case, which axis is malfunctioning. In one embodiment, an output of 0 may be used to indicate no malfunction has been detected (all axis are functioning according to specification) and an output of 1 may be used to indicate a defective axis has been detected. Accordingly, a second output may be used to indicate which axis is defective: x, y, or z, or with a corresponding nonzero integer. The outputs may be combined: 0 for no malfunction, and x, y, or z for the malfunctioning axis if there is one. In the embodiment shown, the index of the defective axis is indicated as *i*.

When a malfunctioning axis is detected in block 300, the axis may be further monitored to determine whether or not the problem disappears and the axis functions correctly again. Upon detection of resumed proper operation, block 300 may indicate that generation of the synthetic signal may cease as no longer being required. The actual sensor signals at the start of the proper operation may be compared to the synthetic signals to obtain feedback on the accuracy of the generation of the synthetic signal. This feedback may be used to adjust the parameters of future periods of synthetic signal generation in order to improve performance. If desired, all detected defective or properly functioning instances and time stamps may be logged for future analysis. Detection block 300 may also be programmed to store sensor signals before and or after a change in behavior to help with the analysis.

The operations performed according to FIG. 3 may be similar to those described above with respect to FIG. 1. For example, the $q_{3k}$ orientation resulting from the gyroscope integration output in block 302 may be input to 6-axis fusion block 304. The $q_{3k}$ orientation may be determined using input from block 306, where the $q_{6_{k-1}}$ fusion orientation for the previous sample **k-1** is determined (block 308). Combining the 6-axis fusion with magnetometer measurement **h** in block 310 determines reference with respect to the earth's magnetic field, and may be output as $q_{9_k}$ from block 312. The $q_{6_{k-1}}$ fusion orientation from block 306 may also be used as an input to block 314 for rotation of earth's gravity to the body frame as discussed above with regard to Equations (1) and (2). The synthetic sensor signal for axis **i** may then be generated in block 316, calibrated along with the accelerometer signals from the other axis in block 318 and fed to block 304 for 6-axis fusion to derive $q_{6_k}$ as shown.

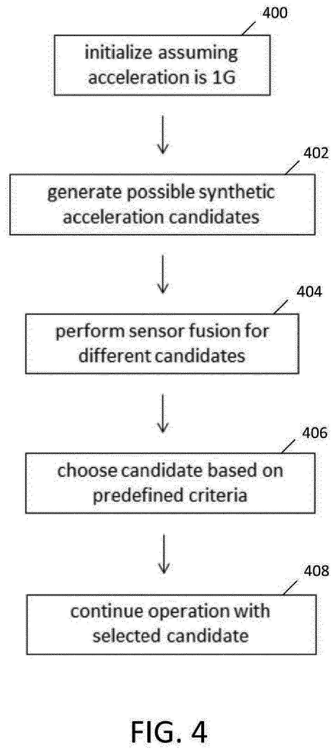

Further details regarding exemplary techniques for generating a synthetic acceleration signal are schematically depicted in FIG. 4. In a first operation, the amplitude of the acceleration signal on the axis of interest may be determined as indicated by 400. For example, it may be assumed that total acceleration measured is 1G, corresponding to earth's gravity field as discussed above. Although acceleration is expressed in terms of G in this embodiment, it may also be expressed in m/s$^2$ as desired. This assumption applies when the acceleration being measured is only due to gravity and the portable device is not undergoing any other motion. Notably, any proper acceleration experience by the portable device would result in a total acceleration not equal to 1G and, unless compensated, may cause an error in the generated synthetic sensor signal. In one aspect, averaging or filtering (e.g. low pass filter) may remove any contribution from the acceleration due to movement of the portable device, such as manipulation by the user. Such processing may increase latency or delay and may be adjusted correspondingly. Alternatively, information from the gyroscope may be used to check if the device is moving or not. A threshold may be set for the signals output by the gyroscope to indicate whether the synthetic acceleration may be calculated based on the 1G assumption. If the gyroscope information indicates the portable device is experiencing acceleration(s) other than gravity, the generation of the synthetic acceleration signal may be delayed until the gyroscope signal fall below the threshold. In another aspect, the gyroscope signals may be used to determine a confidence factor associated with the generated synthetic signal. For example, a relatively large gyroscope signal may be correlated with reduced confidence because the 1G assumption may not be valid. As yet another example, the gyroscope signals may be used to estimate the proper acceleration of the device, which may then be used to adjust the 1G assumption to the correct amplitude of the total acceleration.

Subject to the above discussions regarding the assumption that measured acceleration equals gravity, the synthetic acceleration value may be determined using the values of the other axis. In the description that follows, the **l**-axis is the defective or missing axis, and the **m**-axis and the **n**-axis are the correctly functioning axes in a 3-axis embodiment. Unless otherwise specified, the acceleration signals are with respect to the body frame. The synthetic acceleration on the **l**- axis $a_l$ can be derived based on measurements of $a_m$ and $a_n$ according to Equation (3):

$$(3) \qquad a_l = \pm\sqrt{1 - (a_m^2 + a_n^2)}$$

Correspondingly, the amplitude of $a_l$ may be expressed as Equation (4):

$$(4) \qquad |a_l| = \sqrt{1 - (a_m^2 + a_n^2)}$$

As reflected by the absolute value function, Equation (4) does not resolve the sign of the synthetic acceleration, and provides two candidate solutions for the synthetic acceleration: $a_l^+$ and $a_l^-$ corresponding to 402 of the routine shown in FIG. 4. The two synthetic acceleration candidates are both explored in parallel simultaneous sensor fusion paths in 404 until it is possible to make a decision which of the two synthetic acceleration candidates, $a_l^+$ or $a_l^-$, is the correct choice based upon any suitable criteria as indicated by 406, for example by a comparison between the predicted acceleration signals and the measured acceleration signals. The candidate with the smallest error may be chosen and any further sensor fusion operations may continue with the determined value in 408.

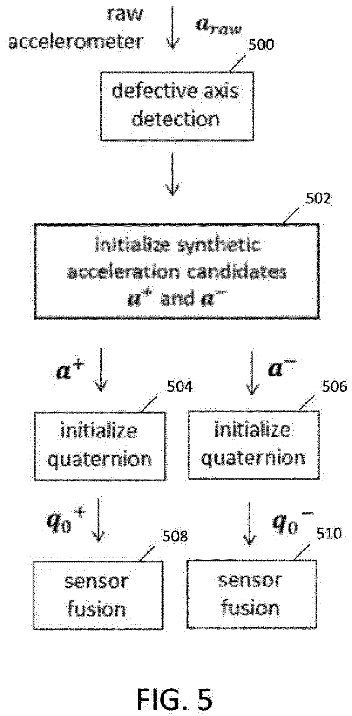

Further details regarding the selection between candidate synthetic acceleration signals are schematically shown in FIG.5. The sensor fusion may be based on a fusion of the gyroscope signals and the accelerometer signals, similar to the discussion in relation to FIG. 1 or FIG. 3. The gyroscope information fed to the sensor fusion operation may then be used to determine a change in orientation with respect to the two candidate initial reference orientations based on either $a_l^+$ or $a_l^-$ in block 306. The predicted accelerometer signal for the orientation after a change in orientation has take placeis then compared to the actual measured accelerometer signal on the axes that were functioning correctly. The solution with the smallest error between the predicted acceleration, based on either $a_l^+$ or $a_l^-$, and the measured acceleration may be assumed to be the correct solution which allows determination of the correct sign for $a_l$. For example, a suitable routine may begin in 500 with detection of an axis which is defective, malfunctioning or missing as described above. In 502, the synthetic acceleration candidates are initialized using Equation (3) and normalization of acceleration to 1G, generating two synthetic acceleration candidates $a^+$ and $a^-$ according to Equation (5):

$$(5) \qquad a^+ = [+a_l, a_m, a_n]; \ a^- = [-a_l, a_m, a_n]$$

In 504 and 506, the two synthetic acceleration candidates $a^+$ and $a^-$ are converted into quaternions $q_0^+$ and $q_0^-$, respectively. These quaternions are then used in 508 and 510 as the reference/initialization quaternions for sensor fusion paths representing the two candidates.

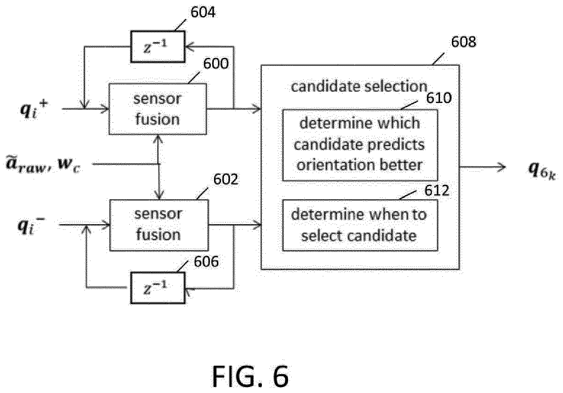

As shown in FIG. 6, each candidate may be used in a sensor fusion operation with the gyroscope information. Based on the two initial quaternions $q_0^+$ and $q_0^-$, the two 6-axis sensor fusion paths are executed in parallel in blocks 600 and 602, respectively, corresponding to the operations discussed in relation to FIG. 3. As will be appreciated, the sensor fusion may be based on the 3-axes of the gyroscope, the two correctly functioning axes of the accelerometer, and the 1 synthetic acceleration signal. The combination of the 2 correctly functioning axes of the accelerometer, and the 1 synthetic acceleration signal may be referred to as the composed accelerometer signal. The outputs from blocks 600 and 602 are compared to select the correct candidate in 608. As will be described below, this may include determining which candidate results in the smallest error with respect to the measured signals in 610 and may also include a determination of when sufficient confidence exists to select the candidate in 612.

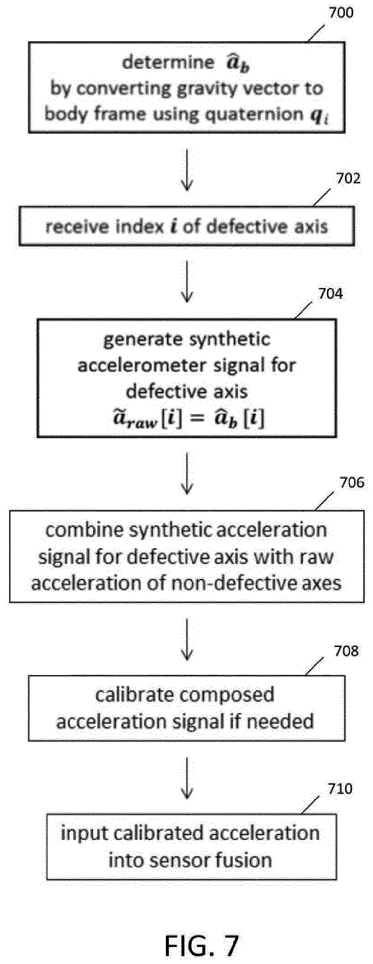

Further details regarding the sensor fusion of the three axes of the gyroscope and the two correct axes of the accelerometer are described in the context of the exemplary routine schematically depicted in FIG. 7, such that similar processes may be performed for $q_i^+$ and $q_i^-$. As indicated by 700, generation of the composed acceleration starts by rotating the inertial frame gravity vector to the body frame using the quaternion result from the sensor fusion ($q_{6k-1}$). In this context, a normalized gravity vector may be used that is the same as the inertial frame z-axis for computational convenience. The resulting acceleration in the body frame is referred to as $\hat{a}_b$ and may be determined using the inverse of the quaternion rotation shown in Equation (1) as indicated by Equation (6):

$$(6) \qquad \hat{a}_b = \begin{bmatrix} 0 \\ \hat{a}_x \\ \hat{a}_y \\ \hat{a}_z \end{bmatrix} = \overline{q'_{6k-1}} \otimes \begin{bmatrix} 0 \\ 0 \\ 0 \\ 1 \end{bmatrix} \otimes \bar{q}_{6k-1}$$

When a synthetic sensor signal is desired, such as upon detection of a malfunctioning axis as indicated by 702, the acceleration signal for the defective axis with index $i$ may be generated in 704 by the corresponding acceleration in the body frame according to Equation (7):

$$(7) \qquad \tilde{a}_{raw}[i] = \hat{a}_b[i]$$

The synthetic acceleration $\tilde{a}_{raw}[i]$ is then combined with the acceleration signals of the other axes to obtain the composed acceleration signal $\tilde{\tilde{a}}_{raw}$ in 706. This composed signal may be normalized (e.g. to 1G) or calibrated to obtain calibrated acceleration signal $\tilde{\tilde{a}}_c$ in 708, which may be used in sensor fusion operations to select the correct candidate. In 710, iterative sensor fusion cycles are performed for both initial quaternions $q_0^+$ and $q_0^-$, estimating the synthetic acceleration based on the quaternion results of the sensor fusion at each cycle. As indicated by the FIGs. 1 and 3 above, sensor fusion using a synthetic sensor signal may employ the same operations as sensor fusion using nominal sensor output. For the sensor fusion, the existence of a defective axis may be ignored when a synthetic signal is available, as the sensor fusion algorithms may remain unchanged. As such, the generated synthetic signal may replace the signal of the defective axis.

As noted above, selection criteria may be defined to determine which of the two candidate synthetic accelerations should be selected. Of the two candidates, one will have the correct sign, and one will have an incorrect sign. By inference, the candidate with the correct sign may be expected to yield the correct initial quaternion ( $q_0^+$ or $q_0^-$ ) that results in relatively less error in the sensor fusion between the predicted acceleration signals and the measured acceleration signals, allowing for selection of the correct candidate.

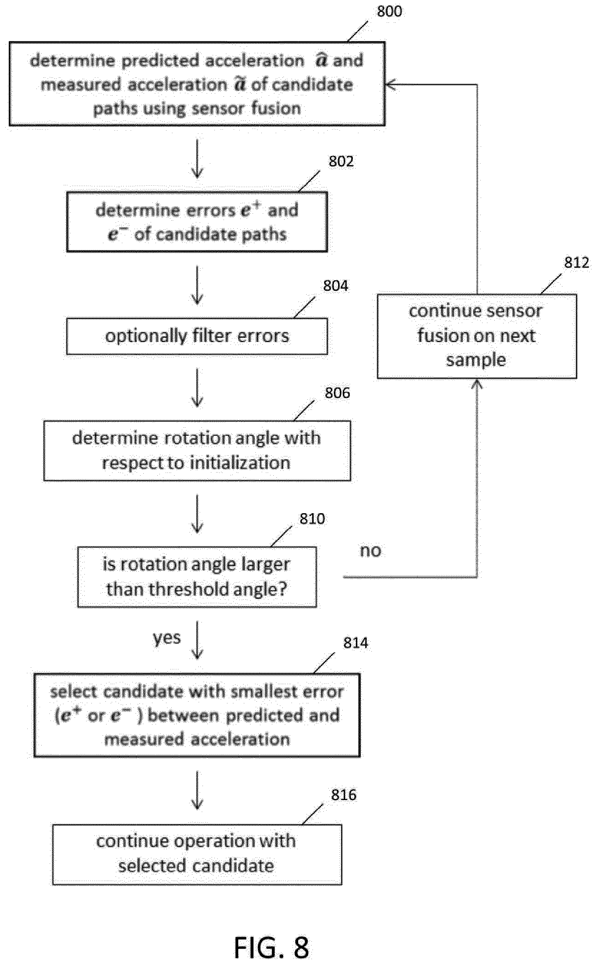

One representative routine for comparing errors to select the appropriate candidate is schematically shown in FIG. 8. The predicted acceleration as obtained from Equation (6) may be compared to measured acceleration as indicated by 800. Errors corresponding to the respective candidates may be determined in 802. As an example, the L2-norm of the error between the prediction and the measurements of the unstuck axes (**m**-axis and **n**-axis) may be used. As such, the errors **e**⁺ and **e**⁻ for quaternions $q_i^+$ and $q_i^-$, respectively, may be determined using Equation (8):

$$(8) \qquad e^+ = \left\| \begin{bmatrix} \tilde{a}_m \\ \tilde{a}_n \end{bmatrix} - \begin{bmatrix} \hat{a}_m \\ \hat{a}_n \end{bmatrix}^+ \right\|^2 ; \quad e^- = \left\| \begin{bmatrix} \tilde{a}_m \\ \tilde{a}_n \end{bmatrix} - \begin{bmatrix} \hat{a}_m \\ \hat{a}_n \end{bmatrix}^- \right\|^2$$

where $\begin{bmatrix} \tilde{a}_m \\ \tilde{a}_n \end{bmatrix}$ is the vector for the measured accelerometer signals for the non-defective axes, and $\begin{bmatrix} \hat{a}_m \\ \hat{a}_n \end{bmatrix}^+$ and $\begin{bmatrix} \hat{a}_m \\ \hat{a}_n \end{bmatrix}^-$ are the accelerometer values for the non-defective axes predicted by rotating the gravity vector to the body frame using quaternions $q_i^+$ and $q_i^-$, respectively (as shown in Equation (6)). The quaternions $q_i^+$ and $q_i^-$ represent the result of the sensor fusion cycles for the different paths. The error norms **e**⁺ and **e**⁻ may be filtered over multiple samples if desired, for example using a low pass filter, as indicated by 804.

In this example the L2 norm was used on the non-defective axes to express the error between the measurements and predictions. However, any other norm may be used to define the error. Also, the error may be calculated including the defective axis. In another example, the error may also be expressed as an angle between the measured acceleration vector and the predicted acceleration vector. Quaternions may be used to compare the measured and predicted orientation, and the error may be expressed as the angle between the quaternions, for example using a dot product method. The error may be calculated in the body frame, the world/inertial frame, or any other frame of reference.

Selection between the synthetic acceleration signal candidates may be based on the sensor fusion using the gyroscope as noted. Correspondingly, a certain degree of movement or rotation of the portable device may facilitate differentiation between the two candidate paths. It may therefore be desirable to perform candidate selection when predefined motion criteria exist. For example, a motion threshold may be employed and the selection may be performed when exceeded, such as by performing one of the techniques explained above.

In this embodiment, the angle $\theta$ may be used to express the rotation angle between the initialization and the current sample. A threshold angle $\theta_{th}$ may be used to define the minimum required motion or rotation as indicated by 810. When the threshold is not exceed, the routine may return to 800 for reinitialization. As an illustration, the threshold angle $\theta_{th}$ may be 10 degrees although other values may be used as desired. Correspondingly, when the angle $\theta$ is larger than the threshold angle $\theta_{th}$, the selection process of the candidate paths may be started, proceeding to 814. The angles may be defined for both candidate paths as $\theta^+$ and $\theta^-$. The selection process may be started if one, or both angles $\theta^+$ and $\theta^-$ are above the threshold angle $\theta_{th}$.

The rotation angles may be obtained using all axes. However, this may cause problems when rotating over the defective axis and this defective axis is aligned with gravity. In this case a rotation is measured, but the non-defective axes do not measure any change in signal. The overcome this problem, the angles $\theta^+$ and $\theta^-$ may be measured as the rotation in the plane of the non-defective axes. This may be accomplished by projecting the orientations to the plane of the non-defective axes and properly normalizing the resulting quaternions for both candidate paths. This approach ensures that the measured rotation leads to a change in acceleration on the non-defective axes.

The rotation calculations may be based on the sensor fusion quaternions, but may also be based on the gyroscope integration on all axes or only the non-defective axes.

If quaternions are used, the angle between the initial quaternion and the quaternion at sample k may be determined using the dot product of the two quaternions, which represents the cosine of the ½ angle of the rotation. In this case, the comparison of the angle with the thresholds may also be expressed using the cosine, e.g. $\boldsymbol{cos}\,\tfrac{1}{2}\theta^+ > \boldsymbol{cos}\,\theta_{th}$.

Other methods, for example using rotation matrices or Euler angles may also be used to determine the amount of motion between the orientations before deciding which candidate path to pick. Any norm may be used to determine the differences between the two orientations.

Errors may now be determined for the candidate in 814, such as by the techniques described above, allowing for selection of the correct candidate. Once enough rotation has been detected with respect to the initial orientation, the error norms, for example as expressed in Equation (8) may be used to determine the correct candidate path. As noted above, the correct synthetic acceleration value will yield relatively less error as compared to the other candidate. Therefore, the sign of the synthetic acceleration is positive (+1) if $\boldsymbol{e}^+ \leq \boldsymbol{e}^-$, and the sign of the synthetic acceleration is negative (-1) if $\boldsymbol{e}^+ > \boldsymbol{e}^-$. Following selection, any further operations may be performed using the selected candidate as indicated by 816.

In the exemplary embodiment above, the errors of the candidate paths were calculated, and at the same time the rotation angle since the initialization was monitored to decide when to choose the correct candidate, such as when movement of the portable device was above a threshold. In another embodiment, the rotation angle may be monitored after the initialization, and only when the rotation is above the threshold angle and a decision which candidate to choose can be made, then the errors of the different paths are calculated and the candidate with the smaller error may be chosen.

If the difference between the errors $\boldsymbol{e}^+$ and $\boldsymbol{e}^-$ is small, the selection process to choose between the synthetic acceleration candidates may be delayed and the system may keep analyzing samples until the difference becomes significant. In other words, a threshold value may be defined for the difference between $\boldsymbol{e}^+$ and $\boldsymbol{e}^-$ and if the difference is below the thresholds the sensor fusion continues and the selection process may be delayed.

In one example, the variance of the acceleration may be determined. If the variance of the accelerometer signals is high, linear acceleration may be corrupting the process and therefore influence one or both errors $\boldsymbol{e}^+$ and $\boldsymbol{e}^-$. This may lead to an erroneous selection. In other words, a threshold value may be defined for the variance of the acceleration and if the variance is above the threshold the selection process may be delayed. In a similar fashion, if one or more accelerometer signals (other than the defective axis) reach a saturation value, the error computations $\boldsymbol{e}^+$ and $\boldsymbol{e}^-$ are delayed in order to maintain the robustness in the numerical calculations. Similarly, when the magnitude of the accelerometer signals (other than the defective axis) reach a value that is above the gravitational acceleration, for example by 10%, the motion and proper acceleration of the device may be deemed to be too fast, and error computations $\boldsymbol{e}^+$ and $\boldsymbol{e}^-$ are delayed. In yet another robustness check, the angle change for consecutive samples of the accelerometer vector for the non-defective axes is tested, using the dot-product operation that yields the cosine of the angle change between vectors. If the angle thus computed is larger than a pre-determined threshold, the motion is assumed to be too fast and the error computations $\boldsymbol{e}^+$ and $\boldsymbol{e}^-$ are delayed in order to maintain the robustness in the numerical calculations. These checks make sure that the correct orientation is chosen by the algorithm even when the device experiences fast motions such as shaking, impact or shock during its operation.

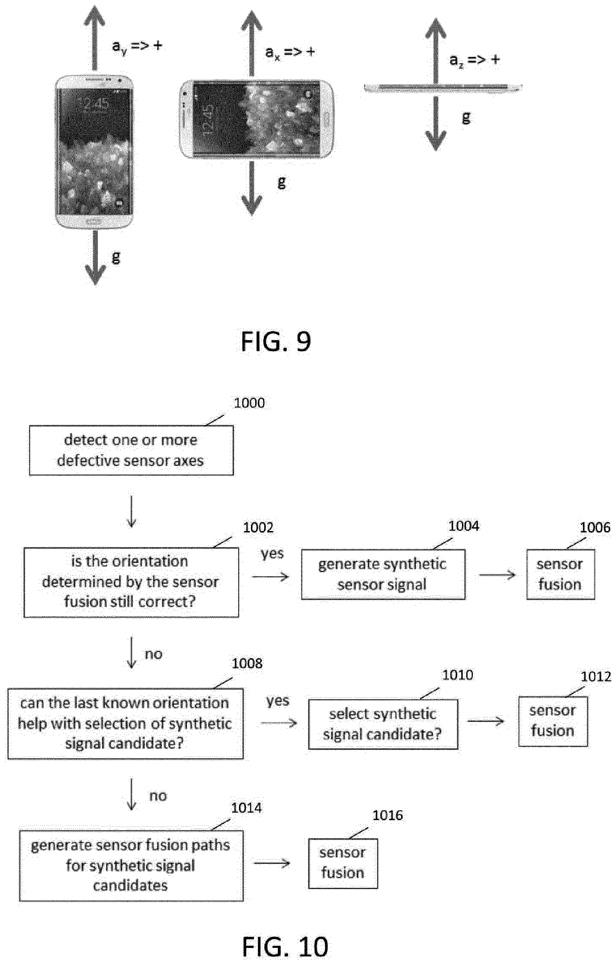

Figure 9 shows preferred orientations of the synthetic acceleration in the absence of a correctly selected synthetic acceleration.

During the time interval between the detection of the defective axis and the selection of the sign of the synthetic acceleration, the correct (sign) synthetic acceleration may be unknown. To avoid having an undefined synthetic acceleration, preset preferences may be defined to determine the synthetic acceleration sign before the selection is done. For example, FIG. 9 schematically illustrates one set of orientations of a portable device in a smartphone embodiment. These orientation may be expected to occur more commonly than the opposite orientations based on conventional usage patterns. As illustrated, in this embodiment the preferred sign for any defective axis may be positive.

The methods above explain the generation of several candidates for the synthetic sensor signal, and the selection process to select the best candidate. These methods may be used when a defective axis is detected when the device starts up and no previous orientation information is available. In addition, these methods may also be applied when the device is in operation, but the sensors are started, and so no sensor data was previously available.

Situations may occur where the sensor fusion is in operation and device orientations are generated for the sensor samples. For example, a quaternion $\boldsymbol{q}_{6_k}$ is available for each data sample k. If an axis becomes defective during the sensor fusion, the orientation that was available before the detection may be used to select the most appropriate candidate or determine the sign of the synthetic sensor signal.

To help illustrate suitable sequences of operation in the event of a defective axis detection, FIG. 10 schematically illustrates example strategies. In other embodiments, different strategies may be employed as warranted by the circumstances. As indicated by 1000, detection of a defective axis may trigger a decision tree. In 1002, the output of the sensor fusion may still provide the correct orientation. In cases where the detection of the defective axis is instantaneous, for example, the signal for that axis is no longer present, the sensor fusion can continue to operate, and the synthetic sensor signal may replace the missing sensor signal, immediately or after a desired duration in 1004. Even if the detection or the starting of the synthetic signal generation takes several samples, the sensor fusion can continue to operate on the gyroscope integration until the synthetic signal becomes available. The generated synthetic sensor signal may be used to provide a composed signal as described above and used for sensor fusion in 1006. If there is not much movement detected between the moment of the defective axis detection and the availability of the synthetic signal, the previous orientation can be used. For these examples the initialization phase that is discussed above in relation to Equations (3)-(5) may not be required.

In cases where the detection of the defective axis is not instantaneous, the erroneous signal of the defective axis may cause the determined orientation by the sensor fusion to be erroneous, causing the routine to branch from 1002 to 1008. For example, if the accelerometer is stuck at a high value of e.g. 1.5G for a significant time, the resulting incorrectly measured acceleration signal may cause errors in the sensor fusion with the gyroscope. The orientation quaternion $q_{6_k}$ is therefore also incorrect. Therefore, it may not be possible to continue with the sensor fusion and simply replace the defective axis signal with the synthetic signal. An initialization phase may be required to recover from the errors introduced by the defective axis. If it is possible to get an estimate of the motion of the device during the defective phase, preferably since the start, this can help during the initialization phase. For example, if the gyroscope signal were stored in a memory during the defective phase, the orientation could be retraced using only the gyroscope signals without being erroneously influenced by the incorrect acceleration signals. In this case, the last known correct orientation before the axis became defective may be used as a reference as indicated in 1008. The orientation estimated purely on the basis of the gyroscope may then help with the candidate selection in the initialization process in 1010, with the generated synthetic signal then used to provide a composed signal to allow sensor fusion in 1012. For example, in the initialization process the two initial quaternions $q_0^+$ and $q_0^-$ are created, and the correct candidate may be chosen immediately based on this orientation based on the gyroscope signals. This avoids the need to have different candidate sensor fusion paths, making the decision later based on the errors between the measurements and the prediction. However, if the previous orientation may not be used, the routine flows to 1014 for generation of sensor fusion paths using the candidate synthetic signals, which may be evaluated as described above. After the correct candidate is selected, sensor fusion to determine the correct orientation of the portable device may be performed in 1016.

The above discussions and examples have been in the context of a defective accelerometer axis. However, this disclosure also extends to other types of sensors. The accelerometer is a sensor that measures a vector field, namely gravity. In the generation of the synthetic signal for the defective axis, the gravity vector is converted to the body frame using the quaternion result (as described with regard to FIGS. 3 and 7). Similar procedures may be applied for any other sensor that measures a vector field. For example, if a magnetometer axis is defective, a corresponding procedure may be employed to generate a synthetic magnetometer signal for the defective axis. In this case, the magnetic field vector, e.g. north, is converted to the body frame using the sensor fusion quaternion. In comparison to an accelerometer, while the magnitude of the gravity vector can be assumed constant over different locations this may not apply to the magnetic field. To compensate, a lookup table or any other suitable means to determine the magnetic field at the current location of the device may be employed. In some embodiments, a source of absolute navigation information, such as a global navigation satellite system (GNSS), may be used as well as any other external indication of location.

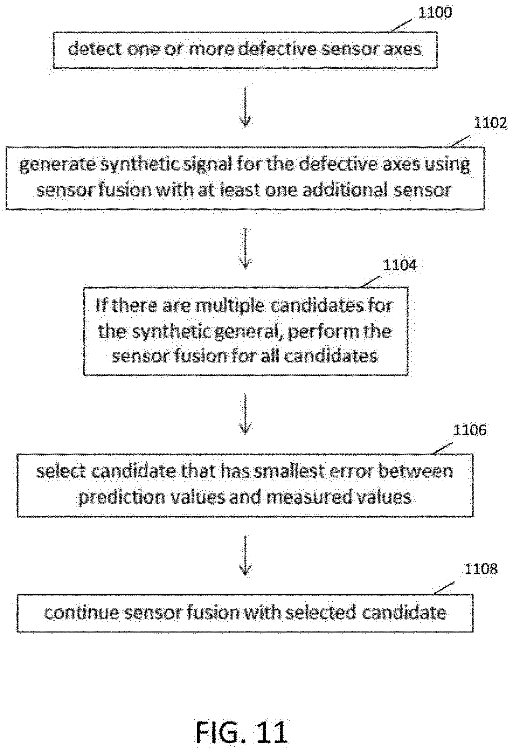

The techniques described above may be exemplified by a schematic flow diagram as shown in FIG. 11, which may include the generation of a synthetic sensor signal for defective sensor axes. In 1100, one or more defective or missing sensor axes may be detected. Following detection, a synthetic signals may be generated for the defective axis or axes in 1102. The synthetic signal generation is based on at least the information of one of the other non-defective axes of the first sensor or of a second sensor. If multiple candidate synthetic signals exist as indicated in 1104, the different candidates are tested in parallel based on a comparison between the predicted signal and the measured signal. The candidate with the least error between the predicted signal and measured signal may be selected in 1106 so that sensor fusion may be performed using a composed signal derived from the selected candidate as indicated by 1108.

The methods to generated synthetic signals may be applied to devices containing at least one sensor. As will be appreciated, the device may be implemented as a device or apparatus, such as a handheld device that can be moved in space by a user and its motion and/or orientation in space therefore sensed. For example, such a handheld device may be a mobile phone (e.g., cellular phone, a phone running on a local network, or any other telephone handset), wired telephone (e.g., a phone attached by a wire), personal digital assistant (PDA), video game player, video game controller, navigation device, activity or fitness tracker device (e.g., bracelet or clip), smart watch, other wearable device, mobile internet device (MID), personal navigation device (PND), digital still camera, digital video camera, binoculars, telephoto lens, portable music, video, or media player, remote control, or other handheld device, or a combination of one or more of these devices.

The principles explained above may be applied for malfunctioning axes of e.g. a 3 axes accelerometer. However, the same principles may also be applied if the sensor has only two axes by design. A 2-axes design will costs less, consume less power, and will take less space. In this case, the architecture will contain a 2-axes sensor, which may cause problems for some applications or programs expecting a 3-axes sensor signal. Therefore, using the methods outlined above, the two physical sensor axes are converted into a synthetic 3-axes sensor signal.

In a low-power embodiment of a 3-axes sensor, only two axes may be active at a given time, such as when one axis is temporarily inactive to conserve power, such as by being in a power save mode. The inactive axis may change in a cyclic manner, or may be multiplexed. Having an individual axis inactive for a short time avoids creating a large error or deviation on the single inactive axis. The inactive axis may also be selected based on the movement of the device. For example, during certain movements or gestures, an axis with the smallest signal values may be switched to inactive. When the movement changes and the synthetic value for the inactive axis grows, the axis may be activated again.

In one embodiment, the methods above may be used for a sensor self-test. In this case, the synthetic signals for a certain axis may be determined, and compared to the actual measured value for that axis. This test may be performed e.g. to check if the sensor needs calibration. The test may be performed periodically, cycling the different axes. Alternatively, the test may be done after high or low values of the sensor, saturation of the sensor, or when the sensor has been functioning at its operational limit.

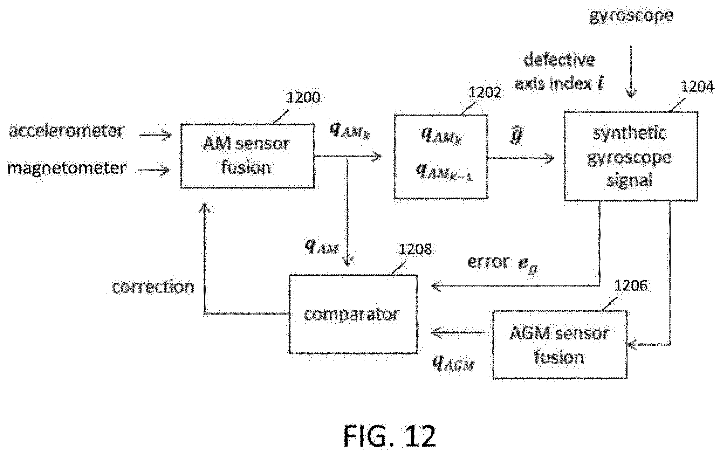

In the sensor examples above, methods were discussed for synthetic axes for sensors measuring vector fields, such as e.g. the accelerometer and the magnetometer. Based on the same principles, but with some accommodation of the algorithms, synthetic sensor signals may also be determined for other types of sensor as well. To illustrate one exemplary embodiment, FIG. 12 schematically depicts the operations associated with the generation of synthetic sensor signals for a gyroscope using sensor fusion with an accelerometer and a magnetometer. Beginning with 1200, the accelerometer and magnetometer are used in "AM" sensor fusion (also called GeoMagnetic Sensor Fusion) to determine an orientation $q_{AM_k}$ at instant $k$. In 1202, the orientations $q_{AM_k}$ and $q_{AM_{k-1}}$ may be compared, at $k$ and at $k\text{-}1$, respectively, to derive the change in orientation. From this change in orientation, an estimate of the angular velocities $\hat{g}$ can be derived for all 3 gyroscope axes. The actual gyroscope signal for the two correctly functioning axes may then be combined with the estimate of the gyroscope signal for the defective axes in 1204, to form the 3-axes synthetic gyroscope signal. In this example the AM sensor fusion will give an orientation with respect to the Earth's magnetic field. If such an absolute reference is not required, the sensor fusion block 1200 may e.g. only process the accelerometer signals and determing a $q_{A_k}$ representing the orientation purely based on the accelerometer measuements. In this case the sensor fusion block 1206 will only contain an accelerometer and gyroscope fusion.

The synthetic gyroscope signal may then be combined with the accelerometer and magnetometer signals in an AGM sensor fusion operation in 1206, resulting in an orientation $q_{AGM}$. The orientation based on the AM fusion and the AGM fusion may then be compared in 1208. In addition, the error $e_g$ observed between the estimation of the gyroscope signal and the actual gyroscope signal of the correctly functioning axes may be used as desired. Based on this comparison, the AM sensor fusion, or the estimation of the gyroscope signal based on the sensor fusion, may be adapted, such as in a manner analogous to the operation of e.g. a Kalman filter.

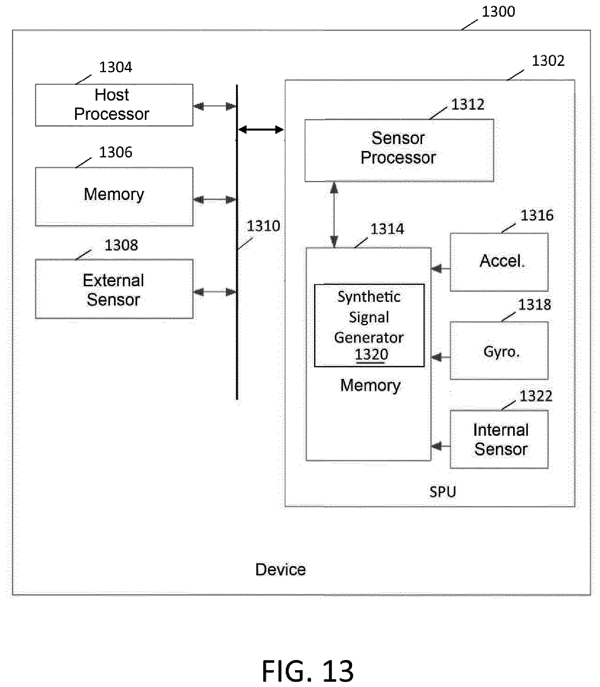

Details regarding one embodiment of portable device 1300 including features of this disclosure are depicted as high level schematic blocks in FIG. 13. As will be appreciated, device 1300 may be implemented as a device or apparatus, such as a handheld device that can be moved in space by a user and its motion and/or orientation in space therefore sensed. The orientation measurement by be part of a sequence of orientations, for example, to determine one or more gestures. For example, such a handheld device may be a mobile phone (e.g., cellular phone, a phone running on a local network, or any other telephone handset), wired telephone (e.g., a phone attached by a wire), personal digital assistant (PDA), video game player, video game controller, navigation device, activity or fitness tracker device (e.g., bracelet or clip), smart watch, other wearable device, mobile internet device (MID), personal navigation device (PND), digital still camera, digital video camera, binoculars, telephoto lens, portable music, video, or media player, remote control, or other handheld device, or a combination of one or more of these devices.

In some embodiments, device 1300 may be a self-contained device or may function in conjunction with another portable device or a non-portable device such as a desktop computer, electronic tabletop device, server computer, etc. which can communicate with the device 1300, e.g., via network connections. The device may be capable of communicating via a wired connection using any type of wire-based communication protocol (e.g., serial transmissions, parallel transmissions, packet-based data communications), wireless connection (e.g., electromagnetic radiation, infrared radiation or other wireless technology), or a combination of one or more wired connections and one or more wireless connections.

As shown, device 1300 includes Motion Processing Unit (MPU), or more generally, Sensor Processing Unit (SPU) 1302, host processor 1304, host memory 1306, and may include one or more sensors, such as external sensor 1308. Host processor 1304 may be configured to perform the various computations and operations involved with the general function of device 1300. Host processor 1304 may be coupled to SPU 1302 through bus 1310, which may be any suitable bus or interface, such as a peripheral component interconnect express (PCIe) bus, a universal serial bus (USB), a universal asynchronous receiver/transmitter (UART) serial bus, a suitable advanced microcontroller bus architecture (AMBA) interface, an Inter-Integrated Circuit (I2C) bus, a serial digital input output (SDIO) bus, or other equivalent. Host memory 1306 may include programs, drivers or other data that utilize information provided by SPU 1302. Exemplary details regarding suitable configurations of host processor 1304 and SPU 1302 may be found in co-pending, commonly owned U.S. Patent Application Serial No. 132/106,921, filed April 21, 2008, which is hereby incorporated by reference in its entirety. Device 1300 may also contain a display (not shown).

In this embodiment, SPU 1302 is shown to include sensor processor 1312, memory 1314, accelerometer 1316 and gyroscope 1318. The accelerometer and/or gyroscope may be implemented as a MEMS-based inertial sensor configured to provide raw data output corresponding to acceleration measured along three orthogonal axes or angular rates of change along three orthogonal axes, respectively, or any equivalent structures. Memory 1314 may store algorithms, routines or other instructions for processing sensor data, such as synthetic signal generator 1320 to perform any of the operations described above, such as detecting one or more defective axes, generating and selecting candidates, providing composed signals and others. The instructions may be stored in any suitable non-transitory computer readable format. The SPU memory may store the required algorithms, routines or other instructions as well as storing data output by sensor. The SPU memory may also store data or temporary data for the calculation of the different candidate synthetic sensor signal paths. If desired, the SPU may include bus, similar to bus for the host processor, for coupling the SPU processor, SPU memory and the internal sensor. The sensor fusion to generate the synthetic sensor signals may be performed in the SPU by the SPU processor for a defective axis of one of the internal or external sensors. The sensor fusion may use the signals from non-defectives axes from one or more sensors, which may be internal or external sensors. Alternatively, some, or all, of the processing and calculation may be performed by the host processor, which may be using the host memory. One or more additional internal sensors, such as internal sensor 1322 may be integrated into SPU 1302 as desired. If provided, external sensor 1308 and/or internal sensor 1322 may include one or more sensors, such as accelerometers, gyroscopes, magnetometers, pressure sensors, microphones, proximity, and ambient light sensors, and temperature sensors among others sensors. As used herein, an internal sensor refers to a sensor implemented using the MEMS techniques for integration with SPU 1302 into a single chip. Similarly, an external sensor as used herein refers to a sensor carried on-board device 1300 that is not integrated into SPU 1302. An accelerometer, gyroscope and/or any other sensor used in the techniques of this disclosure may be implemented as an internal or external sensor as desired.

As will be appreciated, host processor 1304 and/or sensor processor 1312 may be one or more microprocessors, central processing units (CPUs), or other processors which run software programs for device 1300 or for other applications related to the functionality of device 1300. For example, different software application programs such as menu navigation software, games, camera function control, navigation software, and phone or a wide variety of other software and functional interfaces can be provided. In some embodiments, multiple different applications can be provided on a single device 1300, and in some of those embodiments, multiple applications can run simultaneously on the device 1300. Multiple layers of software can be provided on a computer readable medium such as electronic memory or other storage medium such as hard disk, optical disk, flash drive, etc., for use with host processor 1304 and sensor processor 1312. For example, an operating system layer can be provided for device 1300 to control and manage system resources in real time, enable functions of application software and other layers, and interface application programs with other software and functions of device 1300. In some embodiments, one or more motion algorithm layers may provide motion algorithms for lower-level processing of raw sensor data provided from internal or external sensors. Further, a sensor device driver layer may provide a software interface to the hardware sensors of device 1300. Some or all of these layers can be provided in host memory 1306 for access by host processor 1304, in memory 1314 for access by sensor processor 1312, or in any other suitable architecture.

In one aspect, implementing synthetic signal generator 1320 in SPU 1302 may allow the operations described in this disclosure to be performed with reduced or no involvement of host processor 1304. As will be appreciated, this may provide increased power efficiency and/or may free host processor 1304 to perform any other task(s). However, the functionality described as being performed by synthetic signal generator 1320 may be implemented using host processor 1304 and memory 1306 or any other combination of hardware, firmware and software or other processing resources available in portable device 1300.

When SPU 1302 does all the processing of the sensor fusion and the generation of the synthetic sensor signal of a defective-axis of an internal sensor, the rest of the system does not need to know an axis is malfunctioning if the synthetic signal generation works according to specifications. However, the SPU may report any defective axis to the host processor to inform the system. Any logging of errors of the sensor axes may be stored in the host memory or other suitable location.

In the described embodiments, a chip is defined to include at least one substrate typically formed from a semiconductor material. A single chip may be formed from multiple substrates, where the substrates are mechanically bonded to preserve the functionality. A multiple chip includes at least two substrates, wherein the two substrates are electrically connected, but do not require mechanical bonding. A package provides electrical connection between the bond pads on the chip to a metal lead that can be soldered to a PCB. A package typically comprises a substrate and a cover. Integrated Circuit (IC) substrate may refer to a silicon substrate with electrical circuits, typically CMOS circuits. In some configurations, a substrate portion known as a MEMS cap provides mechanical support for the MEMS structure. The MEMS structural layer is attached to the MEMS cap. The MEMS cap is also referred to as handle substrate or handle wafer. In the described embodiments, an electronic device incorporating a sensor may employ a sensor tracking module also referred to as Sensor Processing Unit (SPU) that includes at least one sensor in addition to electronic circuits. The sensor, such as a gyroscope, a magnetometer, an accelerometer, a microphone, a pressure sensor, a proximity sensor, or an ambient light sensor, among others known in the art, are contemplated. Some embodiments include accelerometer, gyroscope, and magnetometer, which each provide a measurement along three axes that are orthogonal to each other. Such a device is often referred to as a 9-axis device. Other embodiments may not include all the sensors or may provide measurements along one or more axes. The sensors may be formed on a first substrate. Other embodiments may include solid-state sensors or any other type of sensors. The electronic circuits in the SPU receive measurement outputs from the one or more sensors. In some embodiments, the electronic circuits process the sensor data. The electronic circuits may be implemented on a second silicon substrate. In some embodiments, the first substrate may be vertically stacked, attached and electrically connected to the second substrate in a single semiconductor chip, while in other embodiments, the first substrate may be disposed laterally and electrically connected to the second substrate in a single semiconductor package.

In one embodiment, the first substrate is attached to the second substrate through wafer bonding, as described in commonly owned U.S. Patent No. 7,104,129, , to simultaneously provide electrical connections and hermetically seal the MEMS devices. This fabrication technique advantageously enables technology that allows for the design and manufacture of high performance, multi-axis, inertial sensors in a very small and economical package. Integration at the wafer-level minimizes parasitic capacitances, allowing for improved signal-to-noise relative to a discrete solution. Such integration at the wafer-level also enables the incorporation of a rich feature set which minimizes the need for external amplification.

In the described embodiments, raw data refers to measurement outputs from the sensors which are not yet processed. Motion data may refer to processed and/or raw data. Processing may include applying a sensor fusion algorithm or applying any other algorithm. In the case of a sensor fusion algorithm, data from a plurality of sensors may be combined to provide, for example, an orientation of the device. In the described embodiments, a SPU may include processors, memory, control logic and sensors among structures.

A frame of reference for a portable device may be the body frame, having three orthogonal axes. Switching from the body frame to the world frame or any other suitable reference frame, or vice versa, may be performed by apply the appropriate rotation to the data. Similarly, the world frame may have axes fixed to the Earth, such as by aligning the Z axis of the world frame with the gravity vector resulting from Earth's gravity field, pointing from the surface of the Earth to the sky. Although the math and descriptions provided in this disclosure are in the context of these frames, one of skill in the art will realize that similar operations may be performed using other definitions and frames of reference. All the teachings could be redone with different definitions. Thus, the orientation of a portable device may be expressed as the rotational operation that translates the body frame to the world frame, such as a rotation operation that aligns the Z axis of the body frame with the gravity vector. In some embodiments, the rotation operation may be expressed in the form of a unit quaternion. As used herein, the terms "quaternion" and "unit quaternion" may be used interchangeably for convenience. Accordingly, a quaternion may be a four element vector describing the transition from one rotational orientation to another rotational orientation and may be used to represent the orientation of a portable device. A unit quaternion has a scalar term and 3 imaginary terms. In this disclosure, the quaternion is expressed with the scalar term first followed by the imaginary terms but, appropriate modifications may be made to the formulas, equations and operations to accommodate different definitions of quaternion.

**Claims**

1. A method for providing sensor data for a portable device (1300), comprising:

   providing a first sensor (1318) integrated with the portable device having multiple axes of measurement;
   providing at least a second sensor (1316) integrated with the portable device having multiple axes of measurement, wherein the operation of the first and second sensor is interrelated in a sensor fusion technique; and
   generating a synthetic signal for a first axis of measurement of the first sensor, the first axis of measurement of the first sensor being one of the multiple axes of measurement of the first sensor, by combining data from another axis or other axes of the multiple axes of measurement of the first sensor together with data from one or more axes of the multiple axes of measurement of the second sensor, wherein the synthetic signal is suitable to replace or correct an output of the first axis of measurement of the first sensor;
   further comprising providing to the sensor fusion technique a substitute signal for the first axis of the first sensor based, at least in part, on the synthetic signal;
   further comprising detecting a malfunction in the first axis of the first sensor, wherein the substitute signal for the first axis of the first sensor is provided to the sensor fusion technique upon detection of the malfunction.

2. The method of claim 1, wherein at least one synthetic signal is derived based on a combination of the data from the at least one axis other than the first axis, and characteristics of a vector field measured by the first sensor.

3. The method of claim 2, wherein the first sensor is an accelerometer and the vector field is the gravitational field, and the at least one synthetic signal is based on the comparison of the acceleration measured on the at least one axis other than the first axis and the acceleration due to the gravitational field.

4. The method of any preceding claim, wherein the first sensor is an accelerometer and the synthetic signal for a first axis of the first sensor is generated based on a conversion of the gravity vector to the body frame of the portable device.

5. The method of claim 1, wherein the combining data comprises generating a plurality of candidates for the synthetic signal.

6. The method of claim 5, wherein parallel sensor fusion paths are executed for the plurality of candidates until a candidate selection process is performed.

7. The method of claim 1, wherein the first sensor comprises a gyroscope and the second sensor comprises an accelerometer and combining data comprises determining a change in orientation based on a plurality of accelerometer signals and estimating an angular velocity based at least in part on the determined orientation change for the gyroscope axes.

8. A portable device (1300) comprising:

a first sensor (1318) integrated with the portable device having multiple axes of measurement;
a second sensor (1316) integrated with the portable device having multiple axes of measurement, wherein the operation of the first and second sensors is interrelated in a sensor fusion technique; and
a sensor processing unit (1302) configured to generate a synthetic signal for a first axis of measurement of the first sensor, the first axis of measurement of the first sensor being one of the multiple axes of measurement of the first sensor, by combining data from another axis or other axes of the multiple axes of measurement of the first sensor together with data from one or more axes of the multiple axes of measurement of the second sensor, , wherein the synthetic signal is suitable to replace or correct an output of the first axis of measurement of the first sensor;
wherein the sensor processing unit is configured to output to the sensor fusion technique a substitute signal for the first axis of the first sensor based, at least in part, on the synthetic signal;wherein the sensor processing unit is configured to output to the sensor fusion technique the substitute signal for the first axis of the first sensor when a malfunction is detected on the first axis.

**Patentansprüche**

1. Verfahren zum Bereitstellen von Sensordaten für eine tragbare Vorrichtung (1300), Folgendes umfassend:

Bereitstellen eines ersten Sensors (1318), welcher mit der tragbaren Vorrichtung integriert ist und mehrere Messachsen aufweist;
Bereitstellen mindestens eines zweiten Sensors (1316), welcher mit der tragbaren Vorrichtung integriert ist und mehrere Messachsen aufweist, wobei der Betrieb des ersten und des zweiten Sensors in einer Sensorfusionstechnik zusammengeknüpft ist; und
Erzeugen eines synthetischen Signals für eine erste Messachse des ersten Sensors, wobei die erste Messachse des ersten Sensors eine der mehreren Messachsen des ersten Sensors ist, durch Kombinieren von Daten von einer oder mehreren anderen Achsen unter den mehreren Messachsen des ersten Sensors, zusammen mit Daten von einer oder mehreren Achsen unter den mehreren Messachsen des zweiten Sensors, wobei das synthetische Signal geeignet ist, um eine Ausgabe von der ersten Messachse des ersten Sensors zu ersetzen oder zu korrigieren;
ferner umfassend das Bereitstellen eines Ersatzsignals für die erste Achse des ersten Sensors an die Sensorfusionstechnik, basierend, mindestens teilweise, auf dem synthetischen Signal;
ferner umfassend das Detektieren einer Fehlfunktion in der ersten Achse des ersten Sensors, wobei das Ersatzsignal für die erste Achse des ersten Sensors an die Sensorfusionstechnik beim Detektieren der Fehlfunktion bereitgestellt wird.

**2.** Verfahren nach Anspruch 1, wobei mindestens ein synthetisches Signal basierend auf einer Kombination der Daten von der mindestens einen Achse, welche von der ersten Achse unterschiedlich ist, und auf Charakteristiken eines Vektorfelds abgeleitet wird, welches durch den ersten Sensor gemessen wird.

**3.** Verfahren nach Anspruch 2, wobei der erste Sensor ein Beschleunigungsmesser und das Vektorfeld das Gravitationsfeld ist, und wobei das mindestens eine synthetische Signal auf dem Vergleich zwischen der Beschleunigung, welche auf der mindestens einen Achse gemessen wird, welche von der ersten Achse unterschiedlich ist, und der Beschleunigung basiert, die vom Gravitationsfeld verursacht wird.

**4.** Verfahren nach einem der vorhergehenden Ansprüche, wobei der erste Sensor ein Beschleunigungsmesser ist und das synthetische Signal für eine erste Achse des ersten Sensors basierend auf einer Umwandlung des Gravitationsvektors in den Körperrahmen der tragbaren Vorrichtung erzeugt wird.

**5.** Verfahren nach Anspruch 1, wobei das Kombinieren der Daten das Erzeugen einer Mehrzahl von Kandidaten für das synthetische Signal umfasst.

**6.** Verfahren nach Anspruch 5, wobei für die Mehrzahl von Kandidaten parallele Sensorfusionspfade ausgeführt werden, bis ein Kandidatenauswahlprozess ausgeführt wird.

**7.** Verfahren nach Anspruch 1, wobei der erste Sensor einen Kreisel umfasst und der zweite Sensor einen Beschleunigungsmesser umfasst und wobei das Kombinieren der Daten das Bestimmen einer Ausrichtungsänderung basierend auf einer Mehrzahl von Beschleunigungsmessersignalen und das Schätzen einer Winkelgeschwindigkeit basierend mindestens teilweise auf der bestimmten Ausrichtungsänderung für die Kreiselachsen umfasst.

**8.** Tragbare Vorrichtung (1300), Folgendes umfassend:

einen ersten Sensor (1318), welcher mit der tragbaren Vorrichtung integriert ist und mehrere Messachsen aufweist,
einen zweiten Sensor (1316), welcher mit der tragbaren Vorrichtung integriert ist und mehrere Messachsen aufweist, wobei der Betrieb des ersten und des zweiten Sensors in einer Sensorfusionstechnik zusammengeknüpft ist; und
eine Sensorverarbeitungseinheit (1302), welche konfiguriert ist, um ein synthetisches Signal für eine erste Messachse des ersten Sensors zu erzeugen, wobei die erste Messachse des ersten Sensors eine der mehreren Messachsen des ersten Sensors ist, durch Kombinieren von Daten von einer oder mehreren anderen Achsen unter den mehreren Messachsen des ersten Sensors, zusammen mit Daten von einer oder mehreren Achsen unter den mehreren Messachsen des zweiten Sensors, wobei das synthetische Signal geeignet ist, um eine Ausgabe von der ersten Messachse des ersten Sensors zu ersetzen oder zu korrigieren;
wobei die Sensorverarbeitungseinheit konfiguriert ist, um an die Sensorfusionstechnik ein Ersatzsignal für die erste Achse des ersten Sensors, basierend, mindestens teilweise, auf dem synthetischen Signal, auszugeben;
wobei die Sensorverarbeitungseinheit konfiguriert ist, um an die Sensorfusionstechnik das Ersatzsignal für die erste Achse des ersten Sensors beim Detektieren einer Fehlfunktion auf der ersten Achse auszugeben.

## Revendications

**1.** Procédé de fourniture de données de capteur pour un appareil portable (1300), comprenant :

la fourniture d'un premier capteur (1318) intégré à l'appareil portable et possédant de multiples axes de mesure ;
la fourniture d'au moins un deuxième capteur (1316) intégré à l'appareil portable et possédant de multiples axes de mesure, le fonctionnement du premier et deuxième capteurs étant en interdépendance dans le cadre d'une technique de fusion de capteurs ; et
la génération d'un signal synthétique pour un premier axe de mesure du premier capteur, le premier axe de mesure du premier capteur faisant partie de multiples axes de mesure du premier capteur, par combinaison de données provenant d'un ou de plusieurs autres axes parmi les multiples axes de mesure du premier capteur avec des données provenant d'un ou plusieurs axes parmi les multiples axes de mesure du deuxième capteur, le signal synthétique étant apte à remplacer ou à corriger une sortie du premier axe de mesure du premier capteur ;
comprenant en outre la fourniture, à la technique de fusion de capteurs, d'un signal de substitution pour le premier axe du premier capteur, au moins en partie, du signal synthétique ;
comprenant en outre la détection d'un dysfonctionnement dans le premier axe du premier capteur, le signal de substitution pour le premier axe du premier capteur étant fourni à la technique de fusion de capteurs après la détection du dysfonctionnement.

2. Procédé selon la revendication 1, dans lequel au moins un signal synthétique est dérivé en fonction d'une combinaison des données provenant de l'au moins un axe autre que le premier axe, et de caractéristiques d'un champ vectoriel mesuré par le premier capteur.

3. Procédé selon la revendication 2, dans lequel le premier capteur est un accéléromètre et le champ vectoriel est le champ gravitationnel, et l'au moins un signal synthétique repose sur la comparaison de l'accélération mesurée sur l'au moins un axe autre que le premier axe et de l'accélération due au champ gravitationnel.

4. Procédé selon l'une quelconque des revendications précédentes, dans lequel le premier capteur est un accéléromètre et le signal synthétique pour un premier axe du premier capteur est généré en fonction d'une conversion du vecteur de gravité en cadre de corps de l'appareil portable.

5. Procédé selon la revendication 1, dans lequel la combinaison des données comprend la génération d'une pluralité de candidats pour le signal synthétique.

6. Procédé selon la revendication 5, dans lequel des chemins de fusion de capteurs parallèles sont mis en œuvre pour la pluralité de candidats jusqu'à ce qu'un processus de sélection de candidat soit réalisé.

7. Procédé selon la revendication 1, dans lequel le premier capteur comprend un gyroscope et le deuxième capteur comprend un accéléromètre, et la combinaison des données comprend la détermination d'une modification d'orientation reposant sur une pluralité de signaux d'accéléromètre et l'estimation d'une vitesse angulaire reposant au moins en partie sur la modification d'orientation déterminée pour les axes de gyroscope.

8. Appareil portable (1300) comprenant :

un premier capteur (1318) intégré à l'appareil portable et possédant de multiples axes de mesure ;
un deuxième capteur (1316) intégré à l'appareil portable et possédant de multiples axes de mesure, le fonctionnement des premier et deuxième capteurs étant en interdépendance dans le cadre d'une technique de fusion de capteurs ; et
une unité de traitement de capteur (1302) conçue pour générer un signal synthétique pour un premier axe de mesure du premier capteur, le premier axe de mesure du premier capteur faisant partie de multiples axes de mesure du premier capteur, par combinaison de données provenant d'un ou de plusieurs autres axes parmi les multiples axes de mesure du premier capteur avec des données provenant d'un ou plusieurs axes parmi les multiples axes de mesure du deuxième capteur, le signal synthétique étant apte à remplacer ou à corriger une sortie du premier axe de mesure du premier capteur ;
l'unité de traitement de capteur étant conçue pour émettre, auprès de la technique de fusion de capteurs, un signal de substitution pour le premier axe du premier capteur, au moins en partie, du signal synthétique ; l'unité de traitement de capteur étant conçue pour émettre, auprès de la technique de fusion de capteurs, le signal de substitution pour le premier axe du premier capteur lorsqu'un dysfonctionnement est détecté sur le premier axe.

FIG. 1

200

detect if an axis is defective

202

generate synthetic signal for the defective axis
using correct accelerometer axes and gyroscope

204

combine synthetic axis signal and
correct axes signals

206

combine composed accelerometer signal
and gyroscope signals in sensor fusion

FIG. 2

FIG. 3

initialize assuming
acceleration is 1G
400

generate possible synthetic
acceleration candidates
402

perform sensor fusion for
different candidates
404

choose candidate based on
predefined criteria
406

continue operation with
selected candidate
408

FIG. 4

raw
accelerometer $\quad\downarrow\quad \boldsymbol{a}_{raw}$ 500

```
defective axis
   detection
```

502

```
initialize synthetic
acceleration candidates
   a⁺ and a⁻
```

$\boldsymbol{a}^+\downarrow$ 504 $\qquad\downarrow\boldsymbol{a}^-$ 506

```
 initialize          initialize
quaternion          quaternion
```

$\boldsymbol{q}_0{}^+\downarrow$ 508 $\qquad\downarrow\boldsymbol{q}_0{}^-$ 510

```
  sensor            sensor
  fusion            fusion
```

FIG. 5

FIG. 6

700

determine $\widehat{a}_b$
by converting gravity vector to
body frame using quaternion $q_i$

702

receive index $i$ of defective axis

704

generate synthetic
accelerometer signal for
defective axis
$\widetilde{a}_{raw}[i] = \widehat{a}_b[i]$

706

combine synthetic acceleration
signal for defective axis with raw
acceleration of non-defective axes

708

calibrate composed
acceleration signal if needed

710

input calibrated acceleration
into sensor fusion

FIG. 7

800

determine predicted acceleration $\hat{a}$ and measured acceleration $\tilde{a}$ of candidate paths using sensor fusion

802

determine errors $e^+$ and $e^-$ of candidate paths

804

optionally filter errors

806

determine rotation angle with respect to initialization

810

is rotation angle larger than threshold angle?

no

812

continue sensor fusion on next sample

yes

814

select candidate with smallest error ($e^+$ or $e^-$) between predicted and measured acceleration

816

continue operation with selected candidate

FIG. 8

$a_y => +$

$g$

$a_x => +$

$g$

$a_z => +$

$g$

FIG. 9

1000

detect one or more
defective sensor axes

1002

is the orientation
determined by the sensor
fusion still correct?

yes →

1004

generate synthetic
sensor signal

→

1006

sensor
fusion

↓ no

1008

can the last known orientation
help with selection of synthetic
signal candidate?

yes →

1010

select synthetic
signal candidate?

→

1012

sensor
fusion

↓ no

1014

generate sensor fusion paths
for synthetic signal
candidates

→

1016

sensor
fusion

FIG. 10

1100
detect one or more defective sensor axes

1102
generate synthetic signal for the defective axes using sensor fusion with at least one additional sensor

1104
If there are multiple candidates for the synthetic general, perform the sensor fusion for all candidates

1106
select candidate that has smallest error between prediction values and measured values

1108
continue sensor fusion with selected candidate

FIG. 11

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090254279 A1
- US 5410487 A
- US 68099315
- US 132106921 A
- US 7104129 B